# EUROPEAN PATENT APPLICATION

(11) **EP 4 749 723 A1**
(43) Date of publication of application: **27.05.2026**
(21) Application number: 24842850.0
(22) Date of filing: 10.06.2024
(51) Int. Cl.: H01M 6/16, H01M 4/06, H01M 4/40, H01M 4/50, H01M 4/62, H01M 4/583

(54) **LITHIUM PRIMARY BATTERY**

(30) Priority: 19.07.2023 JP 2023117595
(71) Applicant: Panasonic Intellectual Property Management Co., Ltd., Kadoma-shi, Osaka 571-0057 (JP)
(72) Inventor: NISHIMURA Naoaki, Kadoma-shi, Osaka 571-0057 (JP); KOTAKE Hiroki, Kadoma-shi, Osaka 571-0057 (JP); MIURA Teruhisa, Kadoma-shi, Osaka 571-0057 (JP); KAWAHARA Yusuke, Kadoma-shi, Osaka 571-0057 (JP)
(74) Representative: Novagraaf International SA
(86) International application number: PCT/JP2024/021073
(87) International publication number: WO 2025/018054

(57) **Abstract**

A lithium primary battery including: a positive electrode; a negative electrode; a separator disposed between the positive electrode and the negative electrode; and a non-aqueous electrolyte solution, in which the positive electrode contains a positive electrode active material and a conductive material, the positive electrode active material contains at least one of manganese dioxide and graphite fluoride, the conductive material contains carbon black, the carbon black contains a metal element in an amount of 0.02 atomic % or more and 0.4 atomic % or less, the negative electrode contains a lithium alloy, the lithium alloy contains magnesium, and the content of the magnesium in the lithium alloy is 0.01 mass % or more and 11 mass % or less.

## Description

### [Technical Field]

The present disclosure relates to a lithium primary battery.

### [Background Art]

Since lithium primary batteries have a high energy density and low self-discharge, they are used as power sources for many electronic devices. A wound electrode assembly of the lithium primary battery is formed by spirally winding a strip-shaped positive electrode, a strip-shaped negative electrode, and a separator disposed between the positive electrode and the negative electrode. For the negative electrode, for example, sheet-like (foil-like) metallic lithium or a lithium alloy is used.

PTL 1 (Japanese Laid-Open Patent Publication No. S62-188167) proposes "a lithium battery including a negative electrode active material constituted of metallic lithium or a lithium-aluminum alloy, a positive electrode active material constituted of an inorganic material other than carbon fluoride, and an electrolyte solution constituted of a non-aqueous electrolyte solution, in which the positive electrode active material further contains acetylene black having a primary particle size of 25 nm or less, a specific surface area of 500 m²/g or more, and a metal impurity content of 500 ppm or less".

PTL 2 (Japanese Laid-Open Patent Publication No. 2011-60655) proposes "a lithium battery including a positive electrode containing manganese dioxide as a positive electrode active material, a negative electrode containing at least one of lithium metal and a lithium alloy as a negative electrode active material, a porous insulator disposed between the positive electrode and the negative electrode, and an organic electrolyte, in which the organic electrolyte contains 0.001 to 1 wt % of a hydroxycarboxylic acid ester".

Paragraph [0034] of PTL 2 states "At least one of lithium metal and a lithium alloy is used for the negative electrode active material. Examples of the lithium alloy include an alloy of lithium with at least one metal selected from the group consisting of aluminum, tin, magnesium, indium, and calcium. The content of metals other than lithium in the lithium alloy is preferably 0.1 to 3 wt %."

### [Citation List]

### [Patent Literature]

PTL 1: Japanese Laid-Open Patent Publication No. S62-188167
PTL 2: Japanese Laid-Open Patent Publication No. 2011-60655

### [Summary of Invention]

### [Technical Problem]

The lithium primary batteries are used as power sources for devices such as an automated external defibrillator (AED). In such a case, the lithium primary battery is suddenly discharged at a large current after long-term storage. However, it may not be possible to extract a sufficient current from the lithium primary battery after long-term storage.

In contrast, it is thought that discharge performance can be improved by incorporating carbon black as a conductive material into the positive electrode. On the other hand, a metal element used during manufacturing may remain in the carbon black. It is thought that the metal element in the carbon black deposits on a surface of the metallic lithium or the lithium alloy used as the negative electrode to cause an internal short circuit or a decrease in discharge capacity.

Further, PTL 1 also describes that when metal impurities in the acetylene black are more than 500 ppm, an inorganic substance in the positive electrode and the metal impurities form a local battery, and a rate at which an elementary reaction between lithium and the inorganic substance is inhibited increases, resulting in a shortened battery life.

### [Solution to Problem]

One aspect of the present disclosure relates to a lithium primary battery including: a positive electrode; a negative electrode; a separator disposed between the positive electrode and the negative electrode; and a non-aqueous electrolyte solution, in which the positive electrode contains a positive electrode active material and a conductive material, the positive electrode active material contains at least one of manganese dioxide and graphite fluoride, the conductive material contains carbon black, the carbon black contains a metal element in an amount of 0.02 atomic % or more and 0.4 atomic % or less, the negative electrode contains a lithium alloy, the lithium alloy contains magnesium, and the content of the magnesium in the lithium alloy is 0.01 mass % or more and 11 mass % or less.

### [Advantageous Effects of Invention]

According to the present disclosure, sufficient discharge characteristics can be obtained when discharging the lithium primary battery at a large current after storage.

Novel features of the present invention are set forth in the appended claims, but the present invention, both in terms of structure and content, together with other objects and features of the present invention, will be better understood from the following detailed description taken in conjunction with the drawings.

### [Brief Description of Drawings]

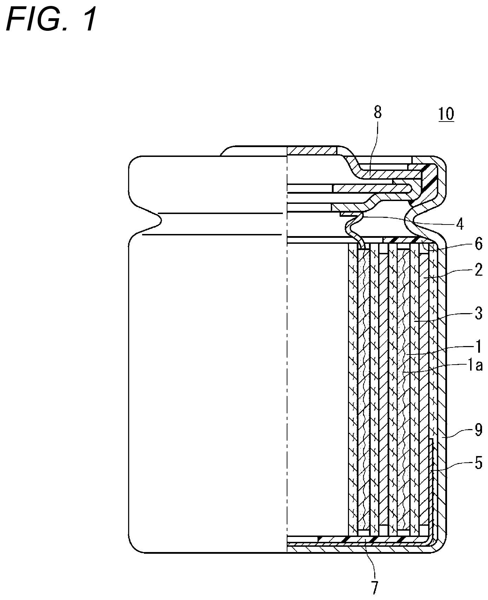

FIG. 1 is a schematical sectional view of a lithium primary battery according to an embodiment of the present invention.

### [Description of Embodiments]

An embodiment of the present disclosure will be described below using examples, but the present disclosure is not limited to the examples described below. In the description below, specific numerical values and materials may be used as examples, but other numerical values and materials may be used as long as effects of the present disclosure are obtained. In this specification, the expression "numeric value A to numerical value B" includes numerical value A and numerical value B and can be read as "numerical value A or more and numerical value B or less". In the description below, when lower and upper limits are given as examples for numerical values of specific physical properties or conditions, any of the exemplified lower limits and any of the exemplified upper limits can be used in any combination, as long as the lower limit is not greater than or equal to the upper limit. When a plurality of materials are given as examples, one may be selected from among them and used alone, or two or more may be used in combination.

The present disclosure also encompasses combinations of the features recited in any two or more claims selected from the multiple claims set forth in the appended claims. That is, the features recited in any two or more claims selected from the multiple claims set forth in the appended claims can be combined as long as there is no technical contradiction.

A lithium primary battery according to the embodiment of the present disclosure includes a positive electrode, a negative electrode, a separator, and a non-aqueous electrolyte solution. The separator is disposed between the positive electrode and the negative electrode. A structure and shape of the lithium primary battery are not particularly limited. The lithium primary battery may be coin-shaped, cylindrical, prismatic, or flat.

The positive electrode, the negative electrode, and the separator may form a wound electrode assembly. The wound electrode assembly is formed by spirally winding a strip-shaped positive electrode, a strip-shaped negative electrode, and a separator disposed between the positive electrode and the negative electrode. Either the negative electrode or the positive electrode may be disposed on an outermost periphery of the electrode assembly. Either the positive electrode or the negative electrode may be disposed on an innermost periphery of the electrode assembly.

The positive electrode includes a positive electrode active material and a conductive material. The positive electrode active material contains at least one of manganese dioxide and graphite fluoride. The conductive material contains carbon black. The carbon black contains a metal element in an amount of 0.02 atomic % or more and 0.4 atomic % or less. The content of the metal element in the carbon black may be 0.02 atomic % or more and 0.3 atomic % or less, or 0.05 atomic % or more and 0.2 atomic % or less.

Here, the content of the metal element in the carbon black refers to a ratio (%) of the number of atoms of the metal element to the total number of atoms (100%) of carbon elements and the metal element contained in the carbon black.

The content of the metal element in the carbon black can be determined by inductively coupled plasma (ICP) emission spectrometry or atomic absorption spectrometry (AAS).

The metal element is not particularly limited, but may be, for example, at least one element selected from the group consisting of Fe, Sr, V, Ni, and Nb. Of these, it is preferable to use Fe, which has high electronic conductivity and is inexpensive. Fe may account for 50 atomic % or more, 70 atomic % or more, or 90 atomic % or more of the metal element.

The metal element in the carbon black has an effect of bringing carbon black structures into contact with each other. As the content of the metal element in the carbon black increases, electronic conductivity of the carbon black will be improved, and thus it is expected that discharge characteristics of the battery will be improved.

However, when carbon black having a high content of the metal element is used for the positive electrode active material such as manganese dioxide or graphite fluoride, the metal element may elute into an electrolyte due to a potential difference with the positive electrode active material. On the other hand, since lithium (Li) is a metal having the most base (lowest) potential of all metal elements, the metal element present in the battery is inherently likely to deposit on a surface of the lithium alloy. Therefore, it is also thought that the metal element in the carbon black may deposit on the surface of the lithium alloy and cause an internal short circuit or a decrease in discharge capacity.

Alloying Li with another metal element can make a potential of an alloy surface noble, but a solid solution state of the alloyed metal is not completely uniform. Therefore, a potential non-uniformity (a state in which there is variation in potential level) occurs on the surface of the lithium alloy. For example, since lithium alloy containing aluminum (Al) tends to be a mixture of Li and a Li-Al alloy, the potential non-uniformity is likely to occur. When such a potential non-uniformity occurs, it is difficult to suppress deposition of the metal element.

On the other hand, the negative electrode according to the present disclosure contains the lithium alloy, the lithium alloy contains magnesium (Mg), and the content of Mg in the lithium alloy is 0.01 mass % or more and 11 mass % or less. Since the lithium alloy containing Mg tends to be a uniform Li-Mg alloy, it is possible to make the potential of the alloy surface noble while maintaining a state in which the potential non-uniformity is less likely to occur. Therefore, the deposition of the metal element is less likely to occur on a surface of the negative electrode or lithium alloy according to the present disclosure, and it is possible to obtain improved discharge characteristics by improvement of the electronic conductivity of the carbon black while suppressing a disadvantage of the deposition of the metal element. As a result, the discharge characteristics of the battery after storage are significantly improved.

When the content of the metal element in the carbon black is less than 0.02 atomic %, an effect of improving the electronic conductivity of the carbon black will not be sufficiently obtained. Further, when the content of the metal element in the carbon black is more than 0.4 atomic %, the amount of the non-aqueous electrolyte solution retained by the carbon black decreases, and it is even more difficult to improve the discharge characteristics.

When the content of Mg in the lithium alloy is less than 0.01 mass %, an effect of suppressing the deposition of the metal element by Mg is not sufficiently obtained. Further, when the content of Mg in the lithium alloy is more than 11 mass %, since activity of the lithium alloy decreases and resistance of the negative electrode increases, it is even more difficult to improve the discharge characteristics.

From the viewpoint of further enhancing the effect of suppressing the deposition of the metal element, the content of Mg in the lithium alloy may be 0.02 mass % or more, or 0.05 mass % or more, and is preferably 0.1 mass % or more or 0.3 mass % or more. Further, from the viewpoint of maintaining the activity of the lithium alloy as high as possible and reducing the resistance of the negative electrode, the content of Mg in the lithium alloy may be 7 mass % or less, 5 mass % or less, or 2 mass % or less, and is preferably 1 mass % or less.

The lithium alloy containing Mg may further contain Al. When the lithium alloy containing Mg contains Al, the potential of the alloy surface becomes further noble. Even in the case of the lithium alloy containing Al, when the lithium alloy contains Mg, the state in which the potential non-uniformity is less likely to occur is maintained. That is, the potential of the alloy surface can be made further noble while maintaining the state in which the potential non-uniformity is less likely to occur. This enhances the effect of suppressing the deposition of the metal element.

Al also has an effect of promoting formation of a low-resistance coating film on the alloy surface. Therefore, using the lithium alloy containing Mg and Al can increase an output voltage compared to using the lithium alloy containing only Mg.

Hereinafter, the lithium alloy containing Mg but substantially free of Al may also be referred to as a "Li-Mg alloy". Further, the lithium alloy containing Mg and Al may also be referred to as a "Li-Mg-Al alloy". Note that "substantially free of Al" means that the amount of Al is below a detection limit in a composition analysis of the lithium alloy (for example, ICP emission spectrometry and atomic absorption spectrometry).

In the case of the Li-Mg-Al alloy, the content of Al in the lithium alloy is preferably 0.01 mass % or more and 3.0 mass % or less. When the content of Al is 0.01 mass % or more, an effect of making the potential of the alloy surface further noble can be obtained. Further, when the Al content is 3.0 mass % or less, good workability of the lithium alloy can be maintained while maintaining the effect of making the potential of the alloy surface further noble. The content of Al in the lithium alloy may be 0.05 mass % or more, or 0.1 mass % or more. The content of Al in the lithium alloy may be 2.0 mass % or less, or 1.0 mass % or less.

In the case of the Li-Mg-Al alloy, the total content of Mg and Al in the lithium alloy is, for example, preferably 0.01 mass % or more and 11.5 mass % or less, or may be 0.02 mass % or more and 11.5 mass % or less, 0.03 mass % or more and 5.5 mass % or less, 0.11 mass % or more and 1.5 mass % or less, or 0.2 mass % or more and 1.3 mass % or less.

A mass ratio of Mg to Al that is Mg/Al may be, for example, 0.2 or more and 50 or less.

In addition to Mg and Al, the lithium alloy may contain one or more metal elements capable of alloying with lithium. Examples of metals capable of alloying with lithium include, but are not limited to, Na, Ca, Sn, Ni, Pb, In, K, Fe, and Si. However, from the viewpoint of ensuring the discharge capacity and stabilizing internal resistance, the total content of metal elements other than lithium contained in the lithium alloy is preferably 15 mass % or less or 11 mass % or less. That is, the content of Li in the lithium alloy used for the negative electrode is preferably 85 mass % or more, or 89 mass % or more, and more preferably 95 mass % or more.

A composition of the lithium alloy can be determined by inductively coupled plasma (ICP) emission spectrometry or atomic absorption spectrometry (AAS).

The lithium primary battery of the present disclosure will be described in more detail below.

### [Lithium Primary Battery]

### (Positive Electrode)

The positive electrode contains at least one of manganese dioxide and graphite fluoride as the positive electrode active material. The manganese dioxide has a high operating voltage, excellent output characteristics, and discharge characteristics (pulse discharge characteristics). On the other hand, the graphite fluoride has excellent high-temperature characteristics and long-term reliability, and also has a higher capacity than manganese dioxide.

The manganese dioxide may be electrolytic manganese dioxide. The manganese dioxide may be in a mixed crystal state containing a plurality of crystalline states. The positive electrode may contain a manganese oxide other than the manganese dioxide. The manganese oxide contained in the positive electrode only needs to be mainly manganese dioxide, and proportion of manganese dioxide in the manganese oxide may be 50 mass % or more, 70 mass % or more, or 90 mass % or more. Examples of the manganese oxide other than the manganese dioxide include MnO, Mn₃O₄, Mn₂O₃, and Mn₂O₇. A particle diameter D₅₀ at a volume fraction of 50% in a volume cumulative particle size distribution of the manganese dioxide is, for example, 20 µm to 60 µm.

The graphite fluoride can be obtained, for example, by fluorinating a carbon material containing a graphite structure. Fluorination proceeds by heating the carbon material together with fluorine gas. The particle diameter D₅₀ of the graphite fluoride at a volume fraction of 50% in the volume cumulative particle size distribution is, for example, 10 µm to 30 µm. The graphite fluoride can be expressed as (CFₓ)ₙ. In the formula, x is, for example, 0.4 ≤ x ≤ 1.15, and may be 0.5 to 1.1.

The positive electrode may contain a positive electrode mixture containing the positive electrode active material and the conductive material as essential components and a binder or the like as an optional component.

The carbon black containing the metal element described above is used as the conductive material. The conductive material may include a material having electronic conductivity other than carbon black. Examples of such a material include natural graphite, artificial graphite, and carbon fiber.

The type of carbon black is not particularly limited, but for example, acetylene black, channel black, furnace black, lamp black, thermal black, and graphitized black can be used. These may be used alone or in combination of two or more types.

The content of carbon black in the positive electrode is, for example, 1.0 part by mass or more and 10 parts by mass or less, and preferably 3.0 parts by mass or more and 6.0 parts by mass or less, with respect to 100 parts by mass of the total positive electrode active material (that is, manganese dioxide and/or graphite fluoride).

Examples of the binder include fluororesins such as polytetrafluoroethylene, rubber particles, and acrylic resins. The content of the binder in the positive electrode is, for example, 0.1 parts by mass or more and 10 parts by mass or less, and preferably 3.0 parts by mass or more and 6.0 parts by mass or less, with respect to 100 parts by mass of the total positive electrode active material (that is, manganese dioxide and/or graphite fluoride).

The positive electrode may further include a positive electrode current collector that holds the positive electrode mixture. Examples of materials for the positive electrode current collector include stainless steel, aluminum, and titanium.

In the case of cylindrical batteries, a positive electrode including a sheet-shaped positive electrode current collector and a positive electrode mixture layer held on the positive electrode current collector can be used. A perforated current collector is preferable as the sheet-shaped positive electrode current collector. Examples of the perforated current collector include expanded metal, net, and punched metal. The positive electrode mixture layer can be obtained, for example, by applying the positive electrode mixture in a wet state to a surface of the sheet-shaped positive electrode current collector or filling the positive electrode current collector with the positive electrode mixture in the wet state, pressing it in a thickness direction, and drying it. In the case of coin-shaped batteries, the positive electrode may be configured by attaching a ring-shaped positive electrode current collector with an L-shaped cross-section to a positive electrode mixture pellet, or the positive electrode may be configured only by the positive electrode mixture pellet. The positive electrode mixture pellet can be obtained, for example, by compression-molding and drying the positive electrode mixture in the wet state.

### (Negative Electrode)

The negative electrode contains the lithium alloy described above. The lithium alloy is formed into any shape and thickness depending on the shape, dimensions, and specified performance of the lithium primary battery.

In the case of the cylindrical batteries, a foil-like (sheet-like) lithium alloy may be used for the negative electrode. The sheet can be obtained, for example, by extrusion molding. More specifically, for the cylindrical batteries, a lithium alloy foil having a shape with a longitudinal and lateral direction may be used. In the case of the coin-shaped batteries, the lithium alloy foil may be punched into a coin shape and used as the negative electrode.

The foil-like (sheet-like) lithium alloy may include a negative electrode current collector (for example., copper foil) supporting the lithium alloy. On the other hand, when the lithium alloy contains Mg, relatively strong Mg may remain in a thin foil (sheet) at an end of discharge. Therefore, the negative electrode may be configured using only the foil-like (sheet-like) lithium alloy without using the negative electrode current collector.

### (Non-aqueous electrolyte solution)

The non-aqueous electrolyte solution contains a non-aqueous solvent and a lithium salt. A concentration of lithium ions (concentration of lithium salt) contained in the non-aqueous electrolyte solution is, for example, 0.2 mol/L or more and 2.0 mol/L or less, or may be 0.3 mol/L or more and 1.5 mol/L or less.

Examples of the non-aqueous solvent include organic solvents that are commonly used for the non-aqueous electrolyte solution of the lithium primary battery. Specifically, ethers, esters, carbonate esters, and the like can be used. More specifically, dimethyl ether, γ-butyrolactone, propylene carbonate (PC), ethylene carbonate (EC), dimethyl carbonate, diethyl carbonate, ethyl methyl carbonate, 1,2-dimethoxyethane (DME), 1,2-diethoxyethane, methyl acetate, ethyl acetate, propyl acetate, and the like can be used. One type of non-aqueous solvent may be used alone, or two or more types may be used in combination.

From the viewpoint of improving the discharge characteristics of the lithium primary battery, the non-aqueous solvent preferably contains a cyclic carbonate with a high boiling point and a chain ether having low viscosity even at low temperatures. The cyclic carbonate preferably contains at least one selected from the group consisting of PC and EC, and PC is particularly preferred. The chain ether preferably contains DME.

Examples of the lithium salt include lithium salts used as solutes in the lithium primary battery. Specific examples include LiCF₃SO₃, LiClO₄, LiBF₄, LiPF₆, LiRaSO₃ (Ra is a fluorinated alkyl group having 1 to 4 carbon atoms), LiFSO₃, LiN(SO₂Rb)(SO₂Rc) (Rb and Rc are each independently a fluorinated alkyl group having 1 to 4 carbon atoms), LiN(FSO₂)₂, LiN(SO₂CF₃)₂, LiN(SO₂F)(POF₂), LiPO₂F₂, LiB(C₂O₄)₂, and LiBF₂(C₂O₄). Among these, from the viewpoint of stability with lithium alloys containing Al and Mg, at least one selected from the group consisting of LiCF₃SO₃, LiBF₄, and LiN(FSO₂)₂ is preferred. The non-aqueous electrolyte solution may contain one of these lithium salts, or two or more of these lithium salts.

The non-aqueous electrolyte solution may further contain an additive. Examples of the additive include propane sultone, propene sultone, ethylene sulfite, 3,2-dioxathiolane-2,2-dioxide, vinylene carbonate, vinylethylene carbonate, fluoroethylene carbonate, adiponitrile, succinonitrile, succinic anhydride, and phthalic anhydride.

### (Separator)

For the separator interposed between the positive electrode and the negative electrode, a porous sheet formed of an insulating material resistant to an internal environment of the lithium primary battery only needs to be used. Specific examples include synthetic resin nonwoven fabric, synthetic resin microporous membrane, or a laminate of these. A thickness of the separator is, for example, 5 µm or more and 100 µm or less.

Examples of synthetic resins used for nonwoven fabrics include polypropylene, polyphenylene sulfide, and polybutylene terephthalate. Examples of synthetic resins used for microporous membranes include polyolefin resins such as polyethylene, polypropylene, and ethylene-propylene copolymers. The microporous membrane may contain inorganic particles as needed.

### (Lithium Primary Battery)

FIG. 1 is a partially sectional front view of the lithium primary battery according to the embodiment of the present invention. A battery case 9 of a lithium primary battery 10 accommodates the wound electrode assembly and the non-aqueous electrolyte solution. The electrode assembly is formed by spirally winding a strip-shaped positive electrode 1 and a strip-shaped negative electrode 2 with a separator 3 interposed therebetween. A sealing plate 8 is attached to an opening of the battery case 9. The positive electrode 1 includes a positive electrode current collector 1a and the positive electrode mixture layer supported on one or both sides of the positive electrode current collector 1a. The positive electrode current collector 1a and the sealing plate 8 are connected via a positive electrode lead 4. The negative electrode 2 includes at least a foil-like (or sheet-like) negative electrode alloy. The negative electrode 2 and the battery case 9 are connected via a negative electrode lead 5. In addition, an upper insulating plate 6 and a lower insulating plate 7 are respectively arranged to prevent the internal short circuit, on upper and lower portions of the electrode assembly.

### <<Supplementary Note>>

The above description of the embodiment discloses the following technologies.

### (Technology 1)

A lithium primary battery including: a positive electrode; a negative electrode; a separator disposed between the positive electrode and the negative electrode; and a non-aqueous electrolyte solution, in which
the positive electrode contains a positive electrode active material and a conductive material,
the positive electrode active material contains at least one of manganese dioxide and graphite fluoride,
the conductive material contains carbon black,
the carbon black contains a metal element in an amount of 0.02 atomic % or more and 0.4 atomic % or less,
the negative electrode contains a lithium alloy,
the lithium alloy contains magnesium, and
the content of the magnesium in the lithium alloy is 0.01 mass % or more and 11 mass % or less.

### (Technology 2)

The lithium primary battery according to Technology 1, in which the content of the magnesium in the lithium alloy is 0.1 mass % or more and 1 mass % or less.

### (Technology 3)

The lithium primary battery according to Technology 1 or 2, in which
the lithium alloy further contains aluminum,
the content of the aluminum in the lithium alloy is 0.01 mass % or more and 3.0 mass % or less, and
the total content of the magnesium and the aluminum in the lithium alloy is 0.01 mass % or more and 11.5 mass % or less.

### (Technology 4)

The lithium primary battery according to one of Technologies 1 to 3, in which the metal element contains at least one selected from the group consisting of Fe, Sr, V, Ni, and Nb.

### [Examples]

The present disclosure will be specifically described below based on Examples and Comparative Examples, but the present disclosure is not limited to the following examples.

### <<Examples 1 to 12 and Comparative Examples 1 to 23>>

### (Carbon Black Synthesis)

The carbon black was obtained by incomplete combustion of raw oil. Thereafter, by adding an aqueous solution containing a predetermined amount of iron ions to the carbon black and treating it under an environment of 1200 K, the carbon black (CB1 to CB5) containing iron (Fe) as the metal element was synthesized. Specifically, the carbon black was impregnated with Fe at the content shown in Table 1. Note that the content of Fe in the carbon black was determined by dissolving the synthesized carbon black in aqua regia, filtering the resultant, and subjecting the filtrate to ICP emission spectrometry.

**[Table 1]**

| CB | CB1 | CB2 | CB3 | CB4 | CB5 |
|---|---|---|---|---|---|
| Fe content | 0.01 atomic % | 0.02 atomic % | 0.11 atomic % | 0.4 atomic % | 0.5 atomic % |

### (Preparation of Positive Electrode)

100 parts by mass of the positive electrode active material was added with 5 parts by mass of the above-mentioned carbon black as the conductive material, 5 parts by mass of polytetrafluoroethylene as the binder, and an appropriate amount of pure water and kneaded to prepare the positive electrode mixture in the wet state. The electrolytic manganese dioxide was used for the positive electrode active material.

Next, the positive electrode mixture was filled into the positive electrode current collector made of a 0.1 mm thick stainless steel expanded metal to prepare a positive electrode precursor. Thereafter, the positive electrode precursor was dried, rolled using a roll press, and cut to obtain the strip-shaped positive electrode. Subsequently, a portion of the filled positive electrode mixture was peeled off, and one end of a positive electrode lead made of a stainless steel was resistance-welded to an exposed portion of the positive electrode current collector. A theoretical capacity of the positive electrode was set to 1600 mAh.

### (Preparation of Negative Electrode)

The following lithium metal foil and lithium alloy foil were prepared as negative electrodes. The theoretical capacity of the negative electrode was set to 1750 mAh.

Negative Electrode 1: Pure lithium foil
Negative Electrode 2: Lithium alloy (Li-Al0.2) containing no Mg and 0.2 mass % of Al
Negative Electrode 3: Lithium alloy (Li-Mg0.01) containing no Al and 0.01 mass % of Mg
Negative Electrode 4: Lithium alloy (Li-Mg0.3) containing no Al and 0.3 mass % of Mg
Negative Electrode 5: Lithium alloy (Li-Mg5) containing no Al and 5 mass % of Mg
Negative Electrode 6: Lithium alloy (Li-Mg11) containing no Al and 11 mass % by mass of Mg
Negative Electrode 7: Lithium alloy (Li-Mg13) containing no Al and 13 mass % by mass of Mg

A negative electrode lead made of nickel was pressure-welded to an end of the lithium alloy foil. An adhesive tape made of a synthetic resin was attached to cover a portion except for a tip of the negative electrode lead.

### (Preparation of Electrode Assembly)

A strip-shaped separator having a predetermined size was prepared. A microporous membrane made of polyethylene having a thickness of 25 µm was used for the separator. The separator was disposed between the positive electrode using a predetermined carbon black and a predetermined negative electrode, and spirally wound with the positive electrode on the inside. In this way, the electrode assembly was prepared with the negative electrode at the outermost periphery. Note that the tip of the negative electrode lead was exposed from one end surface of the electrode assembly, and the tip of the positive electrode lead was exposed from the other end surface of the electrode assembly.

### (Preparation of Non-aqueous Electrolyte Solution)

LiCF₃SO₃ was dissolved at a concentration of 0.5 mol/L in a mixed solvent of PC, EC, and DME (volume ratio: 3:2:5) to prepare a non-aqueous electrolyte.

### (Assembly of Lithium Primary Battery)

The electrode assembly was accommodated in a cylindrical battery case that also served as the negative electrode terminal. An iron case (outer diameter 17 mm, height 33.5 mm) was used as the battery case. Next, the non-aqueous electrolyte solution was poured into the battery case, and the opening of the battery case was closed using a metal sealing plate that also served as the positive electrode terminal. The other end of the positive electrode lead was connected to the sealing plate, and the other end of the negative electrode lead was connected to an inner bottom surface of the battery case. In this way, the lithium primary battery was prepared.

Note that batteries A1 to A12 in Table 2 are batteries of Examples 1 to 12. Batteries B1 to B23 are batteries of Comparative Examples 1 to 23.

**[Table 2]**

| Negative electrode | Carbon black/Fe content (atomic %) | | | | |
|---|---|---|---|---|---|
| | CB1 0.01 atomic % | CB2 0.02 atomic % | CB3 0.11 atomic % | CB4 0.4 atomic % | CB5 0.5 atomic % |
| Li | B1:90 | B2:89 | B3:88 | B4:85 | B5:83 |
| Li-A10.2 | B6:100 | B7:95 | B8:93 | B9:89 | B10:86 |
| Li-Mg0.01 | B11:98 | A1:105 | A2:108 | A3:105 | B12:98 |
| Li-Mg0.3 | B13:99 | A4:107 | A5:110 | A6:107 | B14:99 |
| Li-Mg5 | B15:99 | A7:106 | A8:111 | A9:106 | B16:98 |
| Li-Mg11 | B17:97 | A10:105 | A11:108 | A12:106 | B18:97 |
| Li-Mgl3 | B19:95 | B20:97 | B21:99 | B22:96 | B23:95 |

The resulting batteries of the Examples and Comparative Examples were aged for two days in an atmosphere at 60°C after assembly, and then evaluated as follows.

### [Evaluation]

The batteries after aging were stored at 60°C for one month, then discharged at a current of 1A under an environment of 20°C until the voltage reached 1.5V, and the discharge capacity was measured. In this evaluation, it is assumed that a situation in which the battery is discharged at a large current after long-term storage. Table 2 shows relative values for the batteries when the discharge capacity of the battery B6 is taken as 100.

In the batteries B1 to B5 of Comparative Examples 1 to 5 using lithium foil and the batteries B6 to B10 of Comparative Examples 6 to 10 using Li-A10.2, it is considered that the deposition of Fe on the surface of the negative electrode could not be suppressed, resulting in a decrease in discharge capacity.

In the batteries B19 to B23 of Comparative Examples 19 to 23 using Li-Mg13, it is considered that since activity of the negative electrode decreased, and the internal resistance increased, the discharge capacity decreased.

In the batteries B11, B13, B15, and B17 of Comparative Examples 11, 13, 15, and 17, it is considered that the Fe content in the carbon black was too small to obtain an effect of improving electronic conductivity of the positive electrode, resulting in no increase in discharge capacity.

In the batteries B12, B14, B16, and B18 of Comparative Examples 12, 14, 16, and 18, it is considered that the Fe content in the carbon black was too high, which reduced the amount of the non-aqueous electrolyte solution retained by the carbon black, and thus the discharge capacity decreased.

### <<Examples 13 to 24 and Comparative Examples 24 to 31>>

The following lithium alloy foils were prepared as the negative electrodes. The theoretical capacity of the negative electrodes was set to 1750 mAh.

Negative electrode 8: Lithium alloy (Li-Mg0.3-A10.01) containing 0.01 mass % of Al and 0.3 mass % of Mg
Negative electrode 9: Lithium alloy (Li-Mg0.3-A10.05) containing 0.05 mass % of Al and 0.3 mass % of Mg
Negative electrode 10: Lithium alloy (Li-Mg0.3-A10.2) containing 0.2 mass % of Al and 0.3 mass % of Mg
Negative electrode 11: Lithium alloy (Li-Mg0.3-Al3) containing 3 mass % of Al and 0.3 mass % of Mg

Batteries A13 to A24 of Examples 13 to 24 and Batteries B24 to B31 of Comparative Examples 24 to 31 were prepared and evaluated in the same manner as the batteries Al to A5, except that the negative electrode was changed to one of negative electrodes 8 to 12. Table 3 shows relative values for the batteries when the discharge capacity of the battery B6 in Table 2 taken as 100.

**[Table 3]**

| Negative electrode | Carbon black/Fe content (atomic %) | | | | |
|---|---|---|---|---|---|
| | CB1 0.01 atomic % | CB2 0.02 atomic % | CB3 0.11 atomic % | CB4 0.4 atomic % | CB5 0.5 atomic % |
| Li-Mg0.3-A10.01 | B24:92 | A13:108 | A14:111 | A15:109 | B25:99 |
| Li-Mg0.3-A10.05 | B26:97 | A16:109 | A17:112 | A18:110 | B27:100 |
| Li-Mg0.3-Al0.2 | B28:99 | A19:110 | A20:114 | A21:111 | B29: 100 |
| Li-Mg0.3-Al3 | B30:99 | A22:108 | A23:111 | A24:108 | B31:99 |

Adding Al to the lithium alloy foil containing Mg further increased the discharge capacity. This is considered to be because the potential of the alloy surface became more noble, and the deposition of Fe was significantly suppressed.

Note that in Table 3, the content of Mg in the lithium alloy was fixed at 0.3 mass %, but the same effect of improving the discharge characteristics due to Al was also observed when the content of Mg in the lithium alloy was varied within a range of 0.01 mass % to 11 mass %.

Furthermore, carbon blacks containing Sr, V, Ni, or Nb instead of Fe in the above contents were synthesized and similar evaluations were carried out, and it was confirmed that similar trends were obtained.

### [Industrial Applicability]

The lithium primary battery of the present disclosure is suitably used as, for example, a power source for an automated external defibrillator (AED), a main power source for various meters (for example, smart meters for electricity, water, gas, and the like), and a memory backup power source.

Although the present invention has been described with reference to the presently preferred embodiment, such disclosure should not be interpreted as limiting. Various modifications and variations will no doubt become apparent to those skilled in the art to which the present invention pertains upon reading the above disclosure. Therefore, it is intended that the appended claims be interpreted to cover all modifications and variations without departing from the true spirit and scope of the present invention.

### [Reference Signs List]

1: positive electrode, 1a: positive electrode current collector, 2: negative electrode, 3: separator, 4: positive electrode lead, 5: negative electrode lead, 6: upper insulating plate, 7: lower insulating plate, 8: sealing plate, 9: battery case, 10: lithium primary battery.

## Claims

1. A lithium primary battery comprising: a positive electrode; a negative electrode; a separator disposed between the positive electrode and the negative electrode; and a non-aqueous electrolyte solution, wherein
the positive electrode contains a positive electrode active material and a conductive material,
the positive electrode active material contains at least one of manganese dioxide and graphite fluoride,
the conductive material contains carbon black,
the carbon black contains a metal element in an amount of 0.02 atomic % or more and 0.4 atomic % or less,
the negative electrode contains a lithium alloy,
the lithium alloy contains magnesium, and
the content of the magnesium in the lithium alloy is 0.01 mass % or more and 11 mass % or less.

2. The lithium primary battery according to claim 1, wherein the content of the magnesium in the lithium alloy is 0.1 mass % or more and 1 mass % or less.

3. The lithium primary battery according to claim 1 or 2, wherein
the lithium alloy further contains aluminum,
the content of the aluminum in the lithium alloy is 0.01 mass % or more and 3.0 mass % or less, and
the total content of the magnesium and the aluminum in the lithium alloy is 0.01 mass % or more and 11.5 mass % or less.

4. The lithium primary battery according to claim 1 or 2, wherein the metal element contains at least one selected from the group consisting of Fe, Sr, V, Ni, and Nb.
